**Europäisches Patentamt**

**European Patent Office**

**Office européen des brevets**

(19)

(11) Veröffentlichungsnummer : **0 188 707**
**B1**

(12)

# EUROPÄISCHE PATENTSCHRIFT

(45) Veröffentlichungstag der Patentschrift :
15.03.89

(51) Int. Cl.⁴ : **B 60 G 17/04**

(21) Anmeldenummer : 85115219.9

(22) Anmeldetag : 30.11.85

(54) **Niveauregelventil mit Höhenbegrenzung.**

(30) Priorität : 21.12.84 DE 3446810

(43) Veröffentlichungstag der Anmeldung :
30.07.86 Patentblatt 86/31

(45) Bekanntmachung des Hinweises auf die Patenterteilung : 15.03.89 Patentblatt 89/11

(84) Benannte Vertragsstaaten :
FR GB IT

(56) Entgegenhaltungen :
DE—A— 2 516 060
DE—A— 2 920 507
DE—A— 2 932 298
DE—B— 2 318 535
US—A— 3 059 918

(73) Patentinhaber : **Graubremse GmbH**
**Eppelheimer Strasse 76**
**D-6900 Heidelberg (DE)**

(72) Erfinder : **Blanz, Roland**
**D-6901 Heiligkreuzsteinach (DE)**

(74) Vertreter : **Patentanwälte Dipl.-Ing. Rudolf Bibrach**
**Dipl.-Ing. Elmar Rehberg**
**Postfach 1453 Pütterweg 6**
**D-3400 Göttingen (DE)**

EP 0 188 707 B1

**Beschreibung**

Die Erfindung bezieht sich auf ein Niveauregelventil mit Höhenbegrenzung für luftgefederte Fahrzeuge mit den im Oberbegriff des Anspruchs 1 angegebenen Merkmalen. Die Verwendung eines solchen, die Höhenbegrenzung realisierenden Sperrventils ist an den Einsatz eines Wechselladeventils in der Anlage gebunden, weil nur über ein solches Wechselladeventil das Niveauregelventil im Sinne eines Hebens des Fahrzeugaufbaus übersteuerbar ist.

Ein Niveauregelventil der eingangs beschriebenen Art ist aus der DE-A-25 16 060 bekannt. Das Niveauregelventil ist einerseits an einen Druckluftvorratsbehälter angeschlossen. Von dem kombinierten Ein-/Auslaßventil führt eine Leitung über das Wechselladeventil zu den Luftfederbälgen. In dem Leitungsstück zwischen dem Wechselladeventil und den Luftfederbälgen ist das Sperrventil eingeschaltet. Das Sperrventil wird ebenfalls über den verschwenkbaren Betätigungshebel des Niveauregelventils gesteuert. Es weist einen Ventilkörper und einen Ventilsitz auf, die normalerweise in der Offenstellung gehalten sind und nur bei Überschreiten einer gewissen Winkellage des Betätigungshebels bei angehobenem Fahrzeugrahmen zu einem Schließen des Sperrventils führt. Dies geschieht über eine Steuerstange, die von einer Nockenwelle des Betätigungshebels mitbetätigt wird. Die Steuerstange ist mit Hilfe eines Gewindes längenveränderlich und damit einstellbar und feststellbar ausgebildet, wobei die Steuerstange den Ventilkörper des Sperrventils trägt. Die Achse des Sperrventils ist damit parallel zu der Achse des Niveauregelventils angeordnet, während die Achse der Exzenterwelle des Betätigungshebels sich senkrecht zu den beiden vorgenannten Achsen erstreckt. Die verschiedenen Achsen stehen damit jeweils wechselweise senkrecht aufeinander. Der Anschluß der zu dem Wechselladeventil führenden Leitung des Sperrventils ist axial, also in Richtung der Achse des Sperrventils angeordnet, während der Anschluß am Sperrventil, der zu den Luftfederbälgen führt, radial vorgesehen ist. Nachteilig ist an diesem bekannten Niveauregelventil, daß zur Einstellung des Begrenzungswinkels für das Wirksamwerden des Sperrventils die Verschraubung am Anschluß für die zum Wechselladeventil führende Leitung gelöst werden muß. Die Einstellung ist somit nur in drucklosem Zustand möglich. Außerdem baut dieses Niveauregelventil infolge der parallelen Anordnung der Achsen des Niveauregelventils und des Sperrventils relativ breit und es ist erforderlich, die Nockenwelle des Betätigungshebels vergleichsweise lang auszubilden und mit einer zweiten Nockenfläche auszurüsten.

Aus der DE-AS 23 18 535 ist ein Niveauregelventil bekannt, welches jedoch kein Sperrventil im Sinne einer Höhenbegrenzung aufweist, sondern über ein Vorsteuerventil verfügt, über welches ein zweites großvolumiges Auslaßventil gesteuert wird. Das Vorsteuerventil ist im Gegensatz zu einem Sperrventil normalerweise geschlossen und öffnet umgekehrt erst bei einer bestimmten Winkellage des Betätigungshebels. Ein Wechselladeventil ist hier nicht vorgesehen. Das Vorsteuerventil ist auch hier mit seiner Achse parallel zu der Achse des Niveauregelventils vorgesehen, während sich die Achse der Nockenwelle des Betätigungshebels senkrecht dazu erstreckt. Der Ventilkörper des Vorsteuerventils ist durch eine Stange verlängert, die dichtend durch das Gehäuse hindurchgeführt ist und in einer Verdrehfläche endet, um eine Steuerstange, die ebenfalls mit dem Ventilkörper verbunden ist, über ein Gewinde längenveränderlich relativ zu den Nocken der Nockenwelle einzustellen. Auf diese Weise ist es möglich, einen Begrenzungswinkel einzustellen, bei welchem das Vorsteuerventil öffnen soll, um das zweite großquerschnittige Auslaßventil ebenfalls zu öffnen. Eine Höhenbegrenzung im Sinne einer verläßlichen Absperrung von weiterer Druckluft zu den Luftfederbälgen wird damit nicht erreicht. Nur, wenn das zweite Auslaßventil tatsächlich einen sehr großen Auslaßquerschnitt aufweist, so daß beim plötzlichen Abheben eines schweren Containers vom Fahrgestell die in den Luftfederbälgen eingeschlossene Druckluft hinreichend schnell abströmen kann, wird ein zu großes Ausdehnen und damit ein zu weit gehendes Anheben des Fahrzeugrahmens über die sich ausdehnenden Luftfederbälge vermieden. Ein zweites Auslaßventil kann also prinzipiell nicht so arbeiten wie eine verläßliche Höhenbegrenzung unter Verwendung eines Sperrventils.

Der Erfindung liegt die Aufgabe zugrunde, ein Niveauregelventil mit Höhenbegrenzung der eingangs beschriebenen Art so weiterzubilden, daß sein Sperrventil auf einen gewünschten Betätigungswinkel des Betätigungshebels einstellbar ist, ohne daß das Sperrventil drucklos gemacht werden muß. Weiterhin soll das Niveauregelventil auch vergleichsweise einfacher aufgebaut sein.

Erfindungsgemäß wird dies dadurch erreicht, daß das Sperrventil mit seiner Achse fluchtend zu der Achse des Niveauregelventils auf der anderen Seite der Achse des Betätigungshebels vorgesehen ist, und daß die beiden Anschlüsse zum Sperrventil radial zu der Achse des Sperrventils angeordnet sind. Damit wird es möglich, die Einstellung unter Druck vorzunehmen, weil der Ventilkörper oder der Ventilsitz des Sperrventils zugänglich sind, ohne zuvor den Druck aus der Anlage ablassen zu müssen. In geschickter Weise wird die Achse des Sperrventils nicht parallel zu der Achse des Niveauregelventils, sondern fluchtend zu dieser angeordnet, und zwar auf der anderen Seite, gesehen relativ zu der Achse der Nockenwelle des Betätigungshebels. Dies bedeutet, daß die Axialbewegung der Steuerstange des Niveauregelventils gleichsam auch als Bewegung für die Steuerstange des Sperrventils ausgenutzt wird, mit der Folge, daß die Nockenwelle des Betätigungshebels nur sehr kurz ausgebildet sein muß und im übrigen nur eine Nockenfläche zur Betätigung des Niveauregelventils als auch des Sperrventils nötig ist.

Der Sitz des Sperrventils kann an einem Einsatz im Gehäuse verwirklicht sein, der einen radialen Durchbruch aufweist, der zu einem Anschluß für die Luftfederbälge oder das Wechselladeventil führt, und mittels eines Gewindes im Gehäuse axial verstellbar gelagert ist. Das Sperrventil läßt sich somit in verschiedener Weise schalten. Es kann einmal wirkungsmäßig zwischen dem Wechselladeventil und den Luftfederbälgen angeordnet sein. Es kann aber auch dem Wechselladeventil vorgeschaltet angeordnet sein, wobei es gleichsam zwischen einem Druckluftvorratsbehälter und das Wechselladeventil eingeschaltet ist. Es versteht sich, daß im zweiten Falle die Luftfederbälge an das Wechselladeventil angeschlossen sind.

Das Sperrventil kann eine Steuerstange aufweisen, die in einem Anschlag für einen Ventilkörper endet, der dichtend und gleitend auf der Steuerstange geführt ist und von einer Ventilfeder in Richtung auf den Sitz am Einsatz angepreßt wird. Der Anschlag an der Steuerstange kann einen verdickten Endteil oder einen ringförmigen Vorsprung darstellen. Der Ventilkörper besteht zweckmäßig aus elastisch nachgiebigem Material, z. B. Gummi und ist dichtend auf dem Außendurchmesser der Steuerstange geführt. Er arbeitet mit dem Ventilsitz am Einsatz zusammen.

Die Steuerstange kann durch eine abgedichtete ortsfeste Wand hindurchgeführt sein, zwischen der und dem Ventilkörper sowie dem Ventilsitz des Sperrventils eine Einströmkammer vorgesehen ist, die mit einem Anschluß des Wechselladeventils in dauernder Verbindung steht. Auf diese Art und Weise kann das gemeinsame Gehäuse zwischen Niveauregelventil und Sperrventil geteilt ausgebildet werden, wobei die ortsfeste Wand beim Verschrauben der beiden Gehäuseteile aneinander miteingesetzt werden kann.

In einer bevorzugten Ausführungsform kann der Einsatz zwei Dichtungen aufweisen, zwischen denen eine Ausströmkammer gebildet ist, die mit einem Anschluß zu den Luftfederbälgen in dauernder Verbindung steht. Damit bekommt der Einsatz Mehrfachfunktion.

Die Steuerstange des Sperrventils kann hohl ausgebildet und durch den Einsatz dichtend nach außen hindurchgeführt sein. Damit wird zum einen erreicht, daß die hohle Steuerstange zu Entlüftungszwecken benutzt werden kann, und zwar zur Entlüftung des Auslaßventils des Niveauregelventils, so daß vorteilhaft eine am unteren Ende des Gehäuses angeordnete Entlüftungsöffnung benutzt wird. Zum anderen aber gestattet es die hohle Steuerstange durch sie hindurch und damit auch durch das Sperrventil hindurch die Abschlußstellung des Niveauregelventils einzustellen.

Die Erfindung wird anhand zweier Ausführungsbeispiele weiter beschrieben. Es zeigt :
Fig. 1 eine Schnittdarstellung des Niveauregelventils mit Höhenbegrenzung in einer ersten Ausführungsform mit der Darstellung der wesentlichen angeschlossenen Teile und
Fig. 2 eine Schnittdarstellung durch das Niveauregelventil mit Höhenbegrenzung in einer zweiten Ausführungsform.

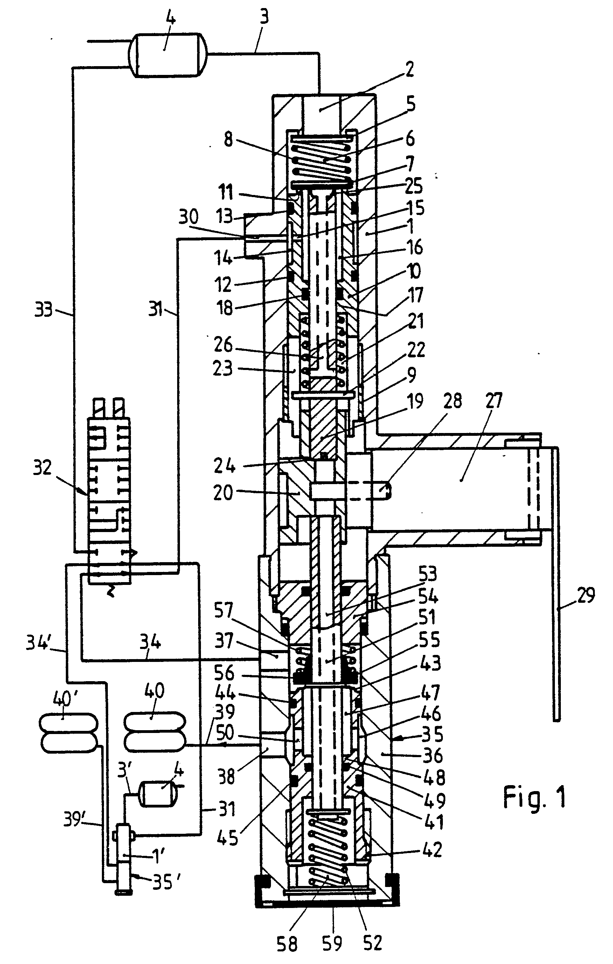

Das in Fig. 1 dargestellte Niveauregelventil mit Höhenbegrenzung besitzt ein Gehäuse 1, in welchem oben axial ein Anschluß 2 vorgesehen ist, zu dem über eine Leitung 3 Druckluft aus einem Vorratsbehälter 4 herangeführt ist. Der Anschluß 2 führt über ein Rückschlagventil 5 zu einer Einströmkammer 6 im Gehäuse 1, die andererseits von einem Ventilkörper 7 abgeschlossen wird. Der Ventilkörper des Rückschlagventils 5 sowie der Ventilkörper 7 werden über eine gemeinsame Feder 8 belastet. Unterhalb des Ventilkörpers 7 ist im Gehäuse 1 mit Hilfe eines Gewindes 9 ein Verstellkörper 10 eingeschraubt, der an seinem oberen Ende einen Einlaßsitz 11 bildet und mit zwei Dichtungen 12 u. 13 im Gehäuse 1 abgedichtet gelagert ist. Zwischen den Dichtungen 12 und 13 ist eine umlaufende Nut 14 vorgesehen. Der Verstellkörper 10 besitzt im Bereich der Nut 14 ein oder mehrere radiale Durchbrechungen 15. Der Verstellkörper 10 ist im übrigen hohl ausgebildet und besitzt eine axiale Bohrung 16, die von oben bis zu einer Wandung 17 reicht, in deren Bereich eine Dichtung 18 vorgesehen ist. Durch Verdrehen des Verstellkörpers 10 gegenüber dem Gehäuse 1 wird der Einlaßsitz 11 vergleichsweise axial angehoben oder abgesenkt. Der Einlaßsitz 11 bildet mit dem Ventilkörper 7 ein Einlaßventil 7, 11.

Durch den Verstellkörper 10 ist eine Steuerstange 19 gleitend und über die Dichtung 18 abgedichtet hindurchgeführt, die sich an einem Führungsstück 20, welches axial beweglich ebenfalls im Gehäuse 1 gelagert ist, abstützt. Diese Abstützung wird durch eine Feder 21 gesichert, die einerseits an dem Verstellkörper 10 gelagert ist und andererseits einen Querbolzen 22 belastet, der die Steuerstange 19 durchsetzt und bis in Schlitze 23 des Verstellkörpers 10 einragt. Die Steuerstange 19 besitzt an ihrem unteren Ende eine Kerbe 24 oder eine sonstige geometrische Ausgestaltung für den Ansatz eines Verdrehwerkzeuges.

Die Steuerstange 19 ist verdrehbar, wobei sie sich in ihrer axialen Lage jedoch nicht verändert. Über ihre Verdrehung wird über den Querbolzen 22 jedoch der Verstellkörper 10 verdreht, so daß dessen Einlaßsitz 11 axial verstellt werden kann. Die Steuerstange selbst trägt an ihrem oberen Ende einen Auslaßsitz, an den ein Kanal 26 anschließt. Der Ventilkörper 7 bildet mit dem Auslaßsitz 25 das Auslaßventil 7, 25.

Im Gehäuse 1 des Niveauregelventils ist eine Nockenwelle 27 drehbar gelagert, an die über einen exzentrisch angeordneten Mitnehmer 28 des Führungsstück 20 gekoppelt ist. Die Verdrehung der Nockenwelle 27 erfolgt über einen Betätigungshebel 29. Es versteht sich, daß in üblicher Weise das Gehäuse 1 am Fahrzeugaufbau und der Betätigungshebel 29 an der betreffenden Fahrzeugachse angelenkt sein kann oder umgekehrt. Auf diese Art und Weise äußern sich Höhenveränderungen zwischen Fahrzeugaufbau und Fahrzeugachse in einer Verdrehung des Betätigungshebels 29 und somit in einem Anheben oder Absenken des Auslaßsitzes 25, so daß entweder das Einlaßventil 7, 11 oder das Auslaßventil 7, 25 geöffnet werden.

Am Gehäuse 1 ist ein Anschluß 30 für eine Leitung 31 vorgesehen, die zu einem Wechselladeventil 32 führt. Das Wechselladeventil 32 wird andererseits über eine Leitung 33 mit Druckluft aus dem Vorratsbehälter 4 versorgt. Es besitzt die vier eingezeichneten Stellungen, die die Leitungsverbindungen zeigen. Die oberste Stellung entspricht der Stellung Heben. Es folgt die Stellung Stop, in welcher sämtliche Leitungen jeweils abgeschlossen sind. Eine weitere Stellung Senken ist vorgesehen. Schließlich ist noch die Stellung Fahrt gebildet, in welcher die Leitungen angeschlossen bzw. eingezeichnet sind. Von dem Wechselladeventil 32 führt eine Leitung 34 zu einem Sperrventil 35, welches mit seiner Achse in der Verlängerung der Achse des Niveauregelventils angeordnet ist. Das Sperrventil 35 weist ein Gehäuse 36 auf, welches an das Gehäuse 1 des Niveauregelventils angeschraubt sein kann. Es sind zwei Anschlüsse 37 und 38 gebildet, die beide radial zu der Achse des Sperrventils 35 angeordnet sind. Vom Anschluß 38 führt eine Leitung 39 zu den Luftfederbälgen 40 eines ersten Kreises. Analog ist ein zweiter Kreis ausgebildet. Der Vorratsbehälter 4 ist nochmals hingezeichnet. Von diesem führt analog eine Leitung 3' zu dem Gehäuse 1' eines weiteren Niveauregelventils mit Höhenbegrenzung, in dessen Unterteil wiederum ein Sperrventil 35' untergebracht ist. Von dem Niveauregelventil führt eine Leitung 31' zu dem Wechselladeventil 32. Von diesem ist in analoger Weise wiederum eine Leitung 34' zu dem Sperrventil 35' vorgesehen. Über eine Leitung 39' sind die Luftfederbälge 40' des anderen Kreises angeschlossen.

Ein wesentlicher Teil des Sperrventils 35 ist ein Einsatz 41, der ähnlich oder auch identisch wie der Verstellkörper 20 ausgebildet sein kann. Der Einsatz 41 ist über ein Gewinde 42 axial verstellbar. Er besitzt einen Sitz 43 an seinem oberen Ende, dessen Relativlage zum Gehäuse 36 bzw. zu noch zu beschreibenden Teilen mit dem Gewinde 42 eingestellt werden kann. Der Einsatz 41 weist zwei Dichtungen 44 und 45 auf, zwischen denen eine umlaufende Nut 46 vorgesehen ist, die in dauernder Verbindung mit dem Anschluß 38 steht. Der Einsatz 41 weist eine axiale Bohrung 47 auf, die an einer Wandung 48 mit Dichtung 49 endet. Eine radiale Durchbrechung 50 verbindet die Bohrung 47 mit der Nut 46.

Ebenso wie sich an dem Führungsstück 20 eine Steuerstange 19 des Niveauregelventils nach oben abstützt, ist nach unten eine weitere Steuerstange 51, nämlich die Steuerstange 51 des Sperrventils 35 über eine Feder 52 abgestützt. Die Steuerstange 52 ist mit einem axial durchgehenden Kanal 53 versehen, der dichtend durch eine ortsfeste Wand 54 sowie ebenfalls dichtend durch den Einsatz 41 hindurchgeführt ist. Die Steuerstange 51 weist einen Anschlag 55, z. B. in Form eines vorspringenden Wulstes, eines eingesetzten Rings o. dgl. auf, der zur Betätigung eines Ventilkörpers 56 dient, der die Steuerstange 51 dichtend umgibt und über eine Feder 57 an der ortsfesten Wand 54 abgestützt ist.

Der Ventilkörper 56 bildet mit dem Sitz 43 das eigentliche Durchlaßventil 43, 56 des Sperrventils 35. Das Gehäuse 36 des Sperrventils 35 ist unten offen gestaltet und dient zu Entlüftungszwecken. Eine Entlüftungsöffnung 58 ist mit einem Flatterventil 59 abgedeckt. Man erkennt, wie man durch Abheben des Flatterventils 59 nicht nur zur Verstellung des Einsatzes 41 gelangen kann. Es ist vielmehr auch möglich, mit einem Verdrehwerkzeug durch den Kanal 53 der Steuerstange 51 bis zu der Kerbe 24 der Steuerstange 19 vorzudringen, um die Abschlußstellung des Einlaßventils 7, 11 auf das Auslaßventil 7, 25 einzustellen. Durch die Verdrehung des Einsatzes 41 mit Hilfe des Gewindes 42 wird die axiale Lage des Sitzes 43 verstellt und somit der Beginn des Schließens des Durchlaßventils 43, 56, welches normalerweise offen ist, auf einen bestimmten Betätigungswinkel des Betätigungshebels 29 eingestellt. Dies ist die Höhenbegrenzung. Wird dieser betreffende Winkel infolge Erreichen der gewünschten zulässigen Höhe erreicht, dann schließt das Durchlaßventil 43, 56, so daß letztlich damit die weitere Luftzufuhr zu den Luftfederbälgen 40 unterbrochen wird.

Die Funktion des Niveauregelventils mit Höhenbegrenzung ist folgende : Das Niveauregelventil mit dem Einlaßventil 7, 11 und dem Auslaßventil 7, 25 arbeitet in üblicher Art und Weise abhängig von dem jeweiligen Beladungszustand und dem Fahrverhalten, so daß dies nicht erneut beschrieben werden muß. Das Niveauregelventil besitzt an sich selbst bereits eine Art Höhenbegrenzung, weil über den Betätigungshebel 29 ein Entladungsvorgang dazu führt, daß sich der Fahrzeugaufbau anhebt, wobei der Betätigungshebel 29 in eine Stellung gerät, in welcher das Einlaßventil 7, 11 geschlossen bleibt und das Auslaßventil 7, 25 geöffnet wird, so daß bei entsprechender Stellung des Wechselladeventils 32 « Fahrt » Druckluft aus den Luftfederbälgen 40, 40' in die Atmosphäre entweichen kann, und zwar über das geöffnete Auslaßventil 7, 25 und letztlich über die Entlüftungsöffnung 58. Die normale Arbeitsweise des Niveauregelventils verhindert somit bereits das Erreichen einer unzulässigen Höhe des Aufbaus relativ zu der Fahrzeugachse.

Wird jedoch das Wechselladeventil 32 in die Stellung Heben verstellt, so werden die Leitungen 31 und 31' abgeschlossen und die Leitungen 34 und 34' mit der Leitung 33 verbunden, so daß Druckluft über die jeweiligen Sperrventile 35 und 35' in die Luftfederbälge 40 und 40' geschickt wird. Der Fahrzeugaufbau hebt sich damit bestimmungsgemäß an. Das Durchlaßventil 43, 56 des Sperrventils 35 und analog das Sperrventil 35' ist geöffnet. Wenn sich dieser Hebevorgang des Fahrzeugaufbaus fortsetzt bis in einen Bereich, der der zulässigen Höhe entspricht, erreicht der Betätigungshebel 29 eine bestimmte Winkelstellung, in welcher durch eine Abwärtsbewegung der Steuerstange 51 unter Mitnahme des Ventilkörpers 56 dieser auf dem ortsfesten Sitz 43 des Einsatzes 41 aufsetzt. Damit ist das Durchlaßventil 43, 56 geschlossen und somit auch die Leitung 39 zu dem Luftfederbalg 30 und analog die Leitung 39' zu dem Luftfederbalg 40 abgeschlossen, so daß die Luftfederbälge vor einem weiteren Einströmen von Druckluft geschützt sind. Die Höhenlage ist damit begrenzt und kann über diesen Punkt hinaus nicht ausgesteuert werden. Umgekehrt ist aber der Ventilkörper 56 nachgiebig auf der Feder 57 abgestützt, so daß in der nachfolgenden Stellung Senken des Wechselladeventils 32 die Leitungen 34 und 34' entlüftet werden, wobei nachfolgend die Luftfederbälge 40 und 40' ebenfalls entlüftet werden, weil der Ventilkörper 56 nach Art eines sich öffnenden Rückschlagventils arbeitet. Wird in die Stellung « Stop » am Wechselladeventil 32 umgeschaltet, dann werden sämtliche Leitungen voneinander abgetrennt, so daß die jeweils erreichte Höhenlage zwischen Fahrzeugaufbau und Fahrzeugachse beibehalten ist. Erfolgt die Umschaltung in die Stellung Fahrt, dann tritt das Niveauregelventil wieder in Funktion und die Mittellage wird über den Betätigungshebel 29 entsprechend dem jeweiligen Beladungszustand ausgesteuert.

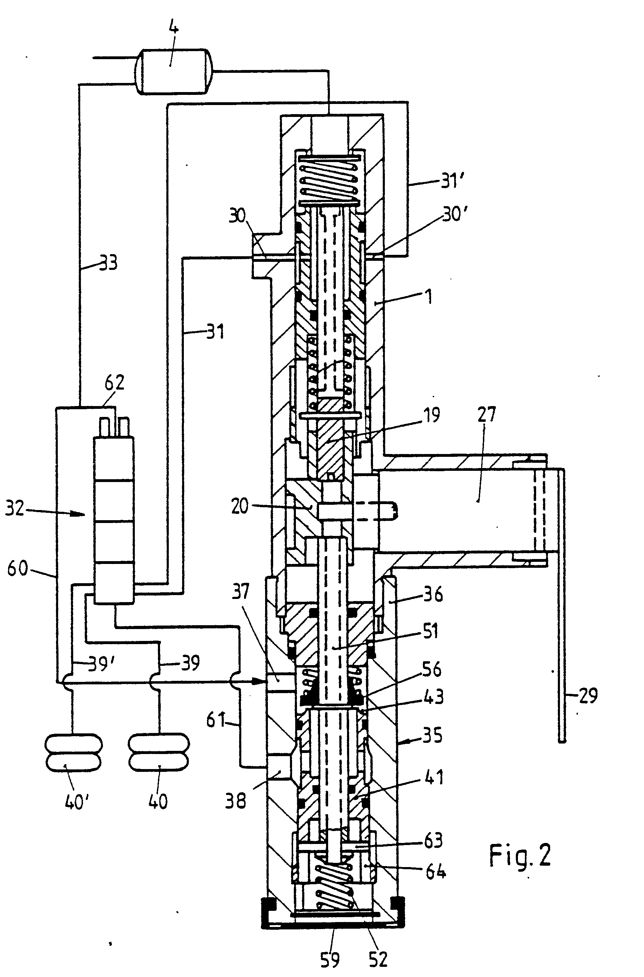

Das Ausführungsbeispiel der Fig. 2 ist sehr ähnlich aufgebaut wie dasjenige der Fig. 1, weshalb für gleiche oder analoge Teile ähnliche Bezugszeichen benutzt sind. Es findet jedoch nur ein Niveauregelventil mit Höhenbegrenzung Verwendung. Am Gehäuse 1 sind nunmehr zwei Anschlüsse 30 und 30' vorgesehen, so daß die beiden Leitungen 31 und 31' zu dem Wechselladeventil 32 geführt sind. Die Leitungen 39 und 39' führen hier von dem Wechselladeventil 32 direkt zu den Luftfederbälgen 40 bzw. 40'. Wie man sieht, ist das Sperrventil 35 etwas anders geschaltet als bei dem Ausführungsbeispiel der Fig. 1. Das Sperrventil 35 ist gleichsam dem Wechselladeventil 32 vorgeschaltet, in dem an den Anschluß 37 eine Leitung 60 angeschlossen ist, die von der Leitung 33 abzweigt und somit Vorratsluft aus dem Behälter 4 führt. Diese Vorratsluft wird nun über das Sperrventil 35 geschickt und gelangt über eine Leitung 61 zu dem Wechselladeventil und von dort beispielsweise in der Stellung Heben über die Leitungen 39 und 39' zu den Luftfederbälgen 40 und 40'. Das Wechselladeventil 32 besitzt über eine Leitung 62 einen eigenen Anschluß für Vorratsluft zur Betätigung seiner Steuerkolben. Das Sperrventil 35 kontrolliert hier gleichsam die Vorratsluftzufuhr zu dem Wechselladeventil 32, und zwar die Luft, die zum Heben des Fahrzeugaufbaus über die Luftfederbälge 40 und 40' ausgesteuert wird. Der Aufbau und die sonstige Wirkung ist analog. Ein Querbolzen 63, der in Schlitze 64 am Einsatz 41 eingreift, erleichtert hier die Verdrehung des Einsatzes 41 und damit die Einstellung der Höhenbegrenzung auf den gewünschten Betätigungswinkel des Betätigungshebels 29.

Bezugszeichenliste :

1 = Gehäuse
2 = Anschluß
3 = Leitung
4 = Vorratsbehälter
5 = Rückschlagventil
6 = Einströmkammer
7 = Ventilkörper
8 = Feder
9 = Gewinde
10 = Verstellkörper
11 = Einlaßsitz
12 = Dichtung
13 = Dichtung
14 = Nut
15 = Durchbrechung
16 = Bohrung
17 = Wandung
18 = Dichtung
19 = Steuerstange
20 = Führungsstück
21 = Feder
22 = Querbolzen
23 = Scheibe
24 = Kerbe
25 = Auslaßsitz
26 = Kanal
27 = Nockenwelle
28 = Mitnehmer
29 = Betätigungshebel
30 = Anschluß
31 = Leitung
32 = Wechselladeventil
33 = Leitung
34 = Leitung
35 = Sperrventil
36 = Gehäuse
37 = Anschluß
38 = Anschluß
39 = Leitung
40 = Luftfederbalg
41 = Einsatz
42 = Gewinde
43 = Sitz
44 = Dichtung
45 = Dichtung
46 = Nut
47 = Bohrung
48 = Wandung
49 = Dichtung
50 = Durchbrechung
51 = Steuerstange
52 = Feder
53 = Kanal
54 = ortsfeste Wand
55 = Anschlag
56 = Ventilkörper
57 = Feder
58 = Entlüftungsöffnung
59 = Flatterventil
60 = Leitung

61 = Leitung
62 = Leitung
63 = Querbolzen
64 = Schlitz


**Patentansprüche**

1. Niveauregelventil mit Höhenbegrenzung für luftgefederte Fahrzeuge, mit einem zwischen einem Anschluß für eine Druckluftquelle und einem Anschluß für ein Wechselladeventil (32) angeordneten Einlaßventil (7, 11), einem zwischen einem Anschluß (30) für das Wechselladeventil (32) und einem Anschluß (58) zur Atmosphäre angeordneten Auslaßventil (7, 25), einem in Abhängigkeit vom Abstand zwischen dem Fahrzeugrahmen und der zugeordneten Fahrzeugachse verschwenkbaren Betätigungshebel (29) und einem ebenfalls von dem Betätigungshebel steuerbaren Sperrventil (35), das zwei Anschlüsse (37, 38) aufweist, den Luftfederbälgen (40) vorgeschaltet ist und in der Stellung Heben des Wechselladeventils (32) die weitere Druckluftzufuhr zu den Luftfederbälgen (40) unterbricht, wobei eine den Ventilkörper (56) des Sperrventils (35) tragende Steuerstange (51) abgedichtet durch eine Wand (54) des Gehäuses (36) hindurchgeführt ist und mit einem einen Ventilsitz (43) tragenden und im Gehäuse abgedichtet gelagerten Einsatz (41) zusammenwirkt, wobei der Ventilkörper (56) oder der Ventilsitz (43) axial ver- und feststellbar angeordnet sind, dadurch gekennzeichnet, daß das Sperrventil (35) mit seiner Achse fluchtend zu der Achse des Niveauregelventils auf der anderen Seite der Achse des Betätigungshebels (29) vorgesehen ist, und daß die beiden Anschlüsse (37, 38) zum Sperrventil (35) radial zu der Achse des Sperrventils (35) angeordnet sind.

2. Niveauregelventil nach Anspruch 1, dadurch gekennzeichnet, daß der Sitz (43) des Sperrventils (35) an einem Einsatz (41) im Gehäuse (36) verwirklicht ist, der einen radialen Durchbruch (50) aufweist, der zu einem Anschluß (38) für die Luftfederbälge (40) oder das Wechselladeventil (32) führt, und mittels eines Gewindes (42) im Gehäuse (36) axial verstellbar gelagert ist.

3. Niveauregelventil nach Anspruch 1 und 2, dadurch gekennzeichnet, daß das Sperrventil (35) eine Steuerstange (51) aufweist, die in einem Anschlag (55) für einen Ventilkörper (56) endet, der dichtend und gleitend auf der Steuerstange (51) geführt ist und von einer Ventilfeder (57) in Richtung auf den Sitz (43) am Einsatz (41) angepreßt wird.

4. Niveauregelventil nach Anspruch 1 bis 3, dadurch gekennzeichnet, daß die Steuerstange (51) durch eine abgedichtete ortsfeste Wand (54) hindurchgeführt ist, zwischen der und dem Ventilkörper (56) sowie dem Ventilsitz (43) des Sperrventils (35) eine Einströmkammer vorgesehen ist, die mit einem Anschluß (37) des Wechselladeventils (32) in dauernder Verbindung steht.

5. Niveauregelventil nach Anspruch 1 bis 4, dadurch gekennzeichnet, daß der Einsatz (41) zwei Dichtungen (44, 45) aufweist, zwischen denen eine Ausströmkammer gebildet ist, die mit einem Anschluß (38) zu den Luftfederbälgen (40) in dauernder Verbindung steht.

6. Niveauregelventil nach Anspruch 1 bis 5, dadurch gekennzeichnet, daß die Steuerstange (51) des Sperrventils (35) hohl ausgebildet ist und durch den Einsatz (41) dichtend nach außen hindurchgeführt ist.

**Claims**

1. Level-regulating valve with height limitation for air-suspension vehicles, with an inlet valve (7, 11) arranged between a connection for a compressed-air source and a connection for a reversing charge valve (32), with an outlet valve (7, 25) arranged between a connection (30) for the reversing charge valve (32) and a connection (58) to the atmosphere, with an actuating lever (29) pivotable in dependence on the distance between the vehicle frame and the associated vehicle axis, and with a shutoff valve (35) which is likewise controllable by the actuating Lever and has two connections (37, 38) and which precedes the pneumatic-spring bellows (40) and, in the lifting position of the reversing charge valve (32), cuts off the further supply of compressed air to the pneumatic-spring bellows (40), a control rod (51) which carries the valve body (56) of the shutoff valve (35) being guided in a sealed-off manner through a wall (54) of the housing (36) and interacting with an insert (41) carrying a valve seat (43) and mounted in a sealed-off manner in the housing, the valve body (56) or the valve seat (43) being arranged so as to be axially adjustable and lockable, characterized in that the shutoff valve (35) is arranged with its axis in line with the axis of the level-regulating valve on the other side of the axis of the actuating lever (29), and in that the two connections (37, 38) to the shutoff valve (35) are arranged radially relative to the axis of the shutoff valve 35).

2. Level-regulating valve according to claim 1, characterized in that the seat (43) of the shutoff valve (35) is formed on an insert (41) located in the housing (36) and having a radial perforation (50) leading to a connection (38) for the pneumatic-spring bellows (40) or the reversing charge valve (32) and is mounted axially adjustably in the housing (36) by means of a thread (42).

3. Level-regulating valve according to claims 1 and 2, characterized in that the shutoff valve (35) has a control rod (51) terminating in a stop (55) for a valve body (56) which is guided sealingly and slideably on the control rod (51) and which is pressed in the direction of the seat (43) on the insert (41) by a valve spring (57).

4. Level-regulating valve according to Claims 1 to 3, characterized in that the control rod (51) is guided through a sealed-off wall (54) fixed in place, between which and the valve body (56) and the valve seat (43) of the shutoff valve (35) there is an inflow chamber which is in permanent communication with a connection (37) of the reversing charge valve (32).

5. Level-regulating valve according to claims 1 to 4, characterized in that the insert (41) has two gaskets (44, 45), between which is formed an outflow chamber which is in permanent communication with a connection (38) to the pneumatic-spring bellows (40).

6. Level-regulating valve according to Claims 1 to 5, characterized in that the control rod (51) of the shutoff valve (35) is made hollow and is guided sealingly outwards through the insert (41).

**Revendications**

1. Soupape de régulation de niveau avec limitation de la hauteur pour des véhicules à suspension pneumatique, avec une soupape d'admission (7, 11) disposée entre un raccord pour une source d'air comprimé et un raccord pour une vanne inverseuse (32) d'alimentation ; une soupape d'échappement (7, 25) disposée entre un raccord (30) pour la vanne inverseuse d'alimentation (32) et un raccord (58) vers l'atmosphère ; un levier d'actionnement (29) pouvant osciller en fonction de la distance entre le châssis du véhicule et l'essieu correspondant du véhicule, et une soupape d'arrêt (35) également commandée par le levier d'actionnement, présentant deux raccords (37, 38), montée en amont des soufflets-ressorts pneumatiques (40), ladite soupape (35) interrompant, dans la position de levée de la vanne inverseuse d'alimentation (32), l'apport supplémentaire d'air comprimé vers les soufflets-ressorts pneumatiques (40), une tige de commande (51) portant le clapet (56) de la soupape d'arrêt (35) étant guidée de manière étanche à travers une cloison (54) du boîtier (36) et coopérant avec une pièce intercalaire (41) portant un siège de clapet (43) et montée de manière étanche dans le boîtier, le clapet (56) ou le siège de clapet étant agencés de manière à être réglables et immobilisables, caractérisée en ce que la soupape d'arrêt (35) est prévue avec son axe en alignement avec l'axe de la soupape de régulation de niveau sur l'autre côté de l'axe du levier d'actionnement (29), et en ce que les deux raccords (37, 38) vers la soupape d'arrêt (35) sont disposés radialement par rapport à l'axe de cette soupape d'arrêt (35).

2. Soupape de régulation de niveau selon la revendication 1, caractérisée en ce que le siège (43) de la soupape d'arrêt (35) est ménagé sur une pièce intercalaire (41) dans le boîtier (36), laquelle présente un orifice radial (50) conduisant à un raccord (38) pour les soufflets-ressorts pneumatiques (40) ou pour la vanne inverseuse d'alimentation (32), et est montée réglable axialement au moyen d'un filetage (42) dans le boîtier (36).

3. Soupape de régulation de niveau selon les revendications 1 et 2, caractérisée en ce que la soupape d'arrêt (35) présente une tige de commande (51) qui se termine en une butée (55) pour un clapet (56), lequel est guidé de manière étanche et coulissante sur la tige de commande (51) et est sollicité par un ressort (57) en direction du siège (43) sur la pièce intercalaire (41).

4. Soupape de régulation de niveau selon les revendications 1 à 3, caractérisée en ce que la tige de commande (51) est guidée de manière étanche à travers une cloison fixe (54), une chambre d'admission étant prévue entre ladite cloison et le clapet (56) ainsi qu'entre cette cloison et le siège de clapet (43) de la soupape d'arrêt (35), ladite chambre étant en liaison permanente avec un raccord (37) de la vanne inverseuse d'alimentation (32).

5. Soupape de régulation de niveau selon les revendications 1 à 4, caractérisée en ce que la pièce intercalaire (41) présente deux joints étanches (44, 45) entre lesquels est constituée une chambre d'échappement qui est en liaison permanente avec un raccord (38) allant vers les soufflets-ressorts pneumatiques (40).

6. Soupape de régulation de niveau selon les revendications 1 à 5, caractérisée en ce que la tige de commande (51) de la soupape d'arrêt (35) est creuse et est guidée vers l'extérieur de manière étanche à travers la pièce intercalaire (41).

Fig. 1

Fig. 2